# EUROPEAN PATENT APPLICATION

(11) **EP 4 199 586 A1**
(43) Date of publication of application: **21.06.2023**
(21) Application number: 21856265.0
(22) Date of filing: 12.08.2021
(51) Int. Cl.: H04W 36/00, H04W 36/38, H04W 36/14, H04W 76/30

(54) **METHOD FOR MANAGING SESSION**

(30) Priority: 13.08.2020 KR 20200101752
(71) Applicant: LG Electronics Inc., Seoul 07336 (KR)
(72) Inventor: KIM, Seokjung, Seoul 06772 (KR); KIM, Laeyoung, Seoul 06772 (KR); YOUN, Myungjune, Seoul 06772 (KR); XU, Jian, Seoul 06772 (KR); BYUN, Daewook, Seoul 06772 (KR)
(74) Representative: Maikowski & Ninnemann Patentanwälte Partnerschaft mbB
(86) International application number: PCT/KR2021/010742
(87) International publication number: WO 2022/035259

(57) **Abstract**

One disclosure of the present specification provides a method by which a next-generation radio access network (NG-RAN) performs communication. Comprised are the steps of: receiving a message from an access and mobility management function (AMF), wherein the message comprises i) a registration accept message, ii) allowed network slice selection assistance information (NSSAI) including a first network slice already allowed for a user equipment (UE), and iii) target NSSAI including a second network slice desired by the UE to receive a service but not supported; transmitting the registration accept message to the UE; determining redirection of the UE for registration to the second network slice; transmitting a reconfiguration message to the UE, wherein the reconfiguration message comprises information for the redirection; receiving a reconfiguration complete message from the UE; and transmitting, to the AMF, a deactivation request regarding a PDU session already established for the first network slice.

## Description

The present specification relates to mobile communications.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Processing of the already established PDU session by redirection of the terminal is a problem.

### SUMMARY

NG-RAN may request deactivation of an already established PDU session to AMF.

The present specification may have various effects.

For example, upon redirection of the terminal, deactivation for the previously established PDU session is performed, and when the terminal redirects again, the corresponding service can be quickly provided only by activation of the established PDU session.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5 and 6 show examples of 5G system architectures to which implementations of the present specification are applied.
FIG. 7 is an exemplary diagram showing the structure of a radio interface protocol in a control plane between a UE and an eNodeB.
FIG. 8 shows an example of a solution for solving support of 5GC assisted cell selection to access network slice.
FIGS. 9a and 9b show the first disclosure of the present specification.
FIG. 10 shows the second disclosure of this specification.
FIGS. 11a and 11b show the third disclosure of this specification.
FIG. 12 shows the fourth disclosure of this specification.
FIG. 13 shows a procedure of NG-RAN for the second disclosure of the present specification.
FIG. 14 shows a procedure of UE for the second disclosure of the present specification.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

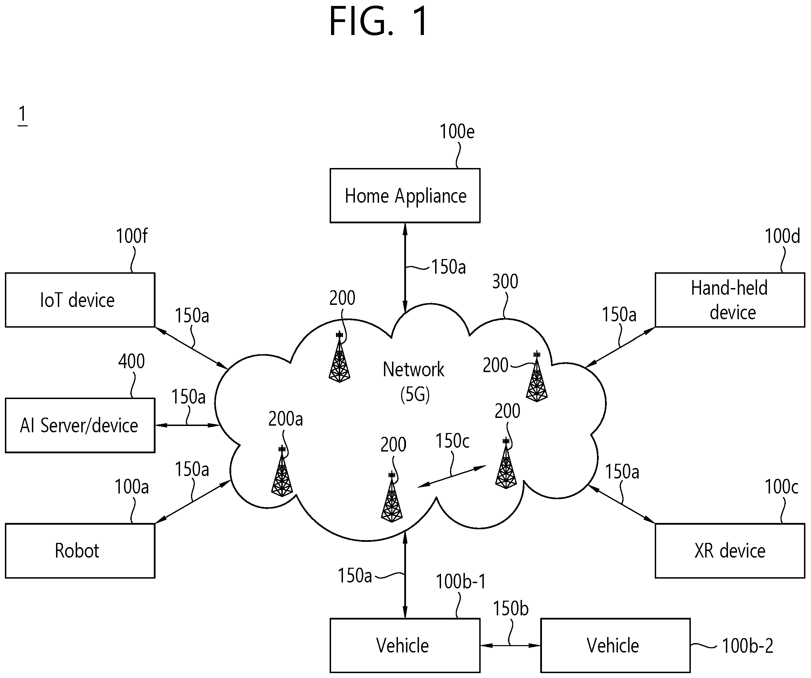

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5GNR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

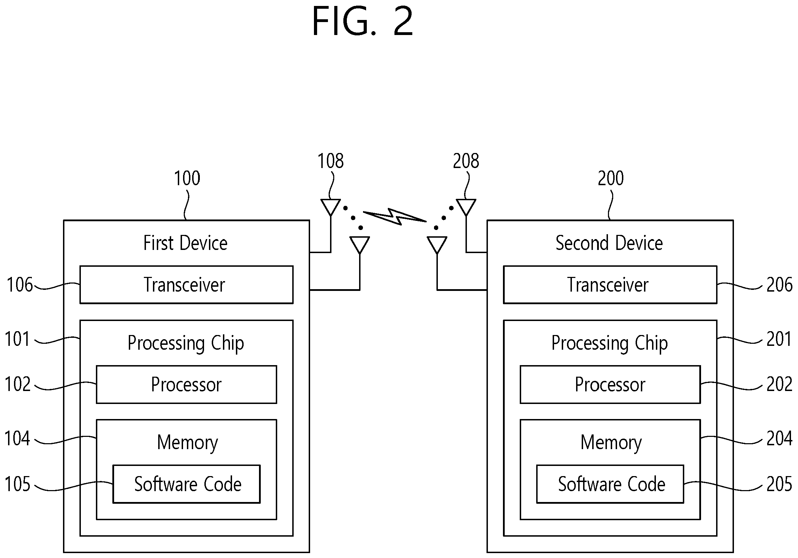

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

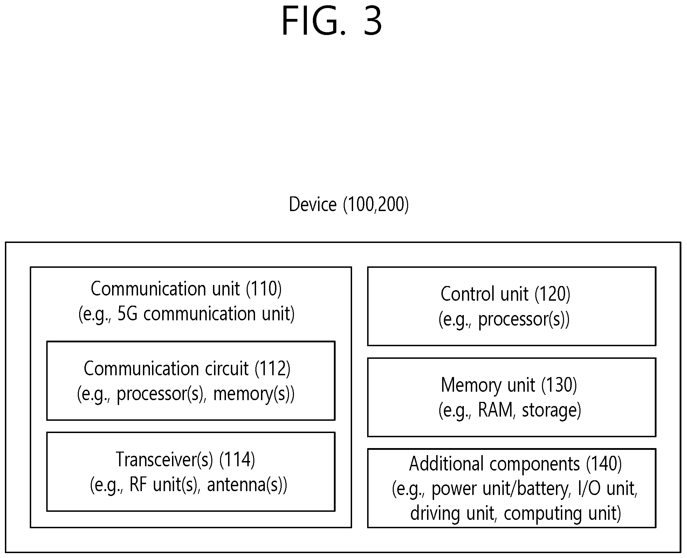

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

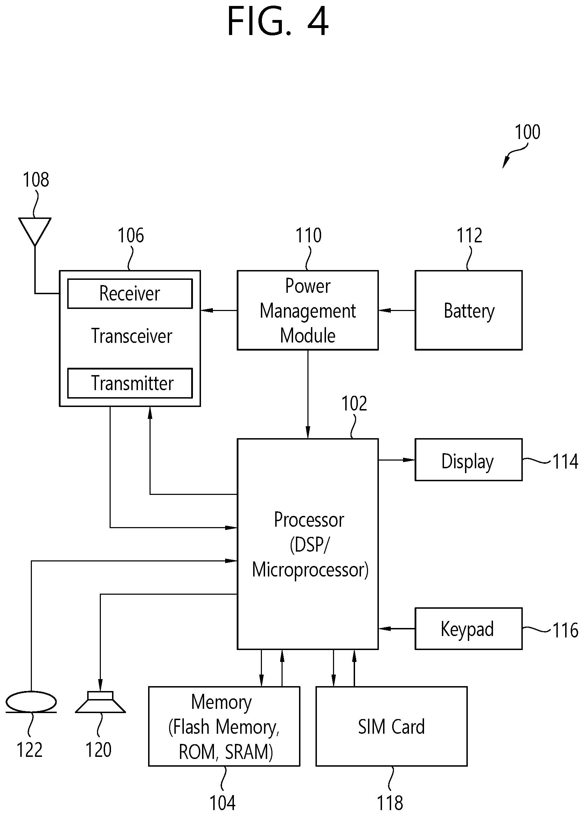

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

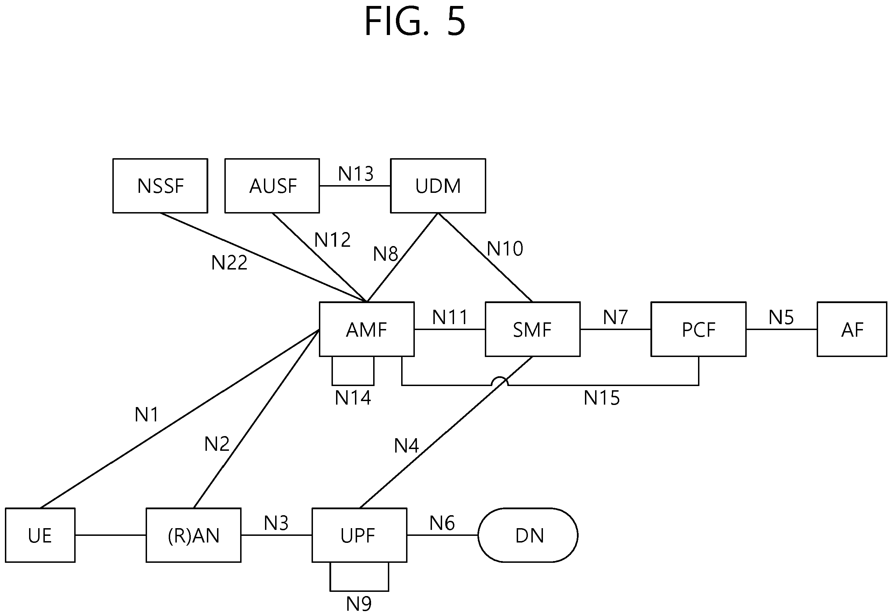

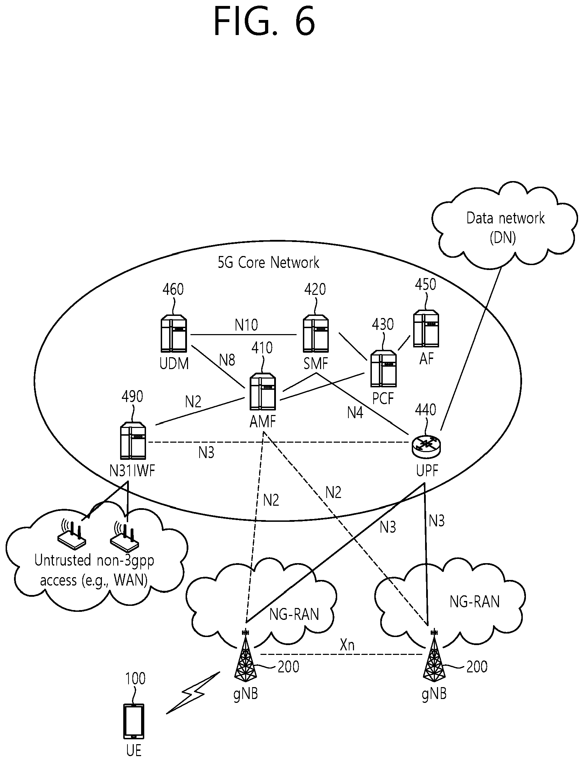

**FIGS. 5** **and** **6** **show examples of 5G system architectures to which implementations of the present specification are applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

5GC (5G Core) may include various components, AMF (Access and Mobility Management Function) 410, SMF (Session Management Function) 420, and PCF (Policy Control) corresponding to some of them Function) 430, UPF (User Plane Function) 440, AF (Application Function) 450, UDM (Unified Data Management) 460, and N3IWF (Non-3GPP InterWorking Function) 490.

The UE 100 is connected to a data network via the UPF 440 through a Next Generation Radio Access Network (NG-RAN) including the gNB 20.

The UE 100 may receive a data service through untrusted non-3rd Generation Partnership Project (non-3GPP) access, for example, a wireless local area network (WLAN). To connect the non-3GPP access to the core network, an N3IWF 490 may be deployed.

### <Network Slice>

Hereinafter, network slicing to be introduced in next-generation mobile communication will be described.

Next-generation mobile communication introduces the concept of network slicing in order to provide various services through one network. Here, network slicing is a combination of network nodes having functions necessary to provide a specific service. A network node constituting a slice instance may be a hardware independent node or a logically independent node.

Each slice instance can be composed of a combination of all nodes necessary to configure the entire network. In this case, one slice instance may provide a service to the UE alone.

Alternatively, a slice instance may be composed of a combination of some of the nodes constituting the network. In this case, the slice instance may provide a service to the UE in conjunction with other existing network nodes without providing a service to the UE alone. In addition, a plurality of slice instances may provide services to the UE in association with each other.

A slice instance differs from a dedicated core network in that all network nodes including a core network (CN) node and a RAN can be separated. In addition, a slice instance is different from a dedicated core network in that network nodes can be logically separated.

### <Structure of A Radio Interface Protocol in A Control Plane>

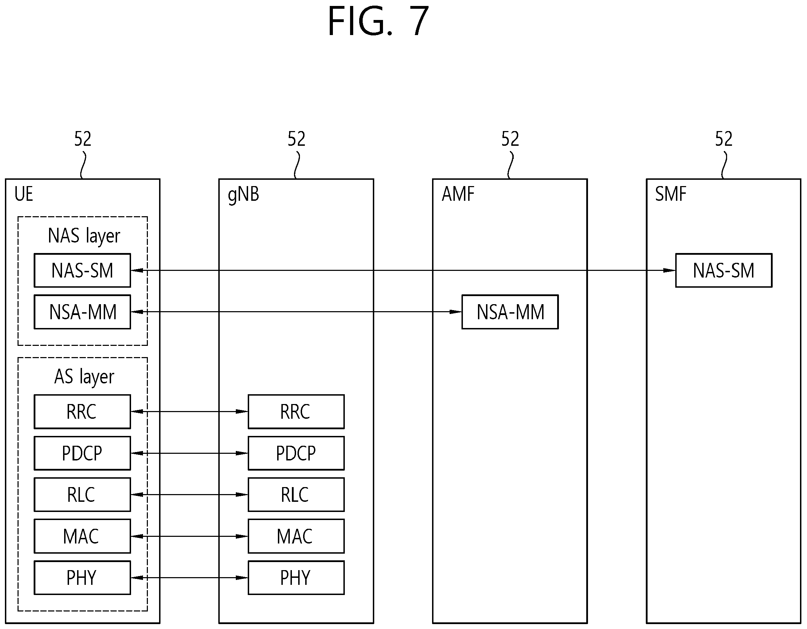

**FIG. 7** **is an exemplary diagram showing the structure of a radio interface protocol in a control plane between a UE and an eNodeB.**

The radio interface protocol is based on the 3GPP radio access network standard. The radio interface protocol consists of a physical layer (Physical layer), a data link layer (Data Link layer) and a network layer (Network layer) horizontally, and is divided into a user plane (User Plane) for data information transmission and control signals for Signaling transmission vertically.

The protocol layers may be distinguished by L1 (layer 1), L2 (layer 2), and L3 (layer 3) based on the lower 3 layers of the Open System Interconnection (OSI) standard model widely known in communication systems.

Hereinafter, each layer of the control plane shown in FIG. 7 will be described.

The first layer, the physical layer, provides an information transfer service using a physical channel. The physical layer is connected to the upper medium access control layer through a transport channel, and data is transmitted between the medium access control layer and the physical layer through the transport channel. Also, data is transferred through physical channels between different physical layers, that is, between the physical layers of the transmitting side and the receiving side.

There are several layers in the second layer. First, the Medium Access Control (MAC) layer serves to map various logical channels to various transport channels, and also performs a role of logical channel multiplexing that maps multiple logical channels to one transport channel. The MAC layer is connected to the RLC layer, which is the upper layer, through a logical channel. The logical channels are largely divided into a control channel that transmits control plane information and a traffic channel that transmits user plane information, according to the type of transmitted information.

The Radio Link Control (RLC) layer of the second layer segments and concatenates the data received from the upper layer to adjust the data size so that the lower layer can transmit data over the radio section. In addition, three operation modes of TM (Transparent mode, transparent mode), UM (Un-acknowledged mode, non-response mode), and AM (Acknowledged mode, Response mode) are provided. In particular, AM RLC performs a retransmission function through an Automatic Repeat and Request (ARQ) function for reliable data transmission.

The Packet Data Convergence Protocol (PDCP) layer of the second layer performs a header compression function that reduces IP packet header size including relatively large in size and contains unnecessary control information, in order to efficiently transmit IP packets such as IPv4 or IPv6 in a wireless section with a small bandwidth. This serves to increase the transmission efficiency of the radio section by transmitting only necessary information in the header part of the data. In addition, in the LTE system, the PDCP layer also performs a security function, which consists of ciphering to prevent data interception by a third party and integrity protection to prevent data manipulation by a third party.

The Radio Resource Control (RRC) layer located at the top of the third layer is defined only in the control plane, and is responsible for control of logical channels, transport channels, and physical channels in relation to set, reset and release of radio bearers (abbreviated as RBs). In this case, RB means a service provided by the second layer for data transfer between the UE and the E-UTRAN.

If there is an RRC connection between the RRC of the terminal and the RRC layer of the wireless network, the terminal is in an RRC connected state (Connected mode), otherwise it is in an RRC idle state (Idle mode).

Hereinafter, the RRC state and the RRC connection method of the terminal will be described. The RRC state refers to whether or not the RRC of the UE has a logical connection with the RRC of the E-UTRAN. When connected, it is called RRC_CONNECTED state, and when not connected, it is called RRC_IDLE state. Since the UE in the RRC_CONNECTED state has an RRC connection, the E-UTRAN can recognize the existence of the corresponding UE in units of cells, and thus can effectively control the UE. On the other hand, the UE in the RRC_IDLE state cannot be detected by the E-UTRAN, and is managed by the core network in TA (Tracking Area) units, which are larger than cells. That is, for the UE in the RRC_IDLE state, the presence of the corresponding UE is only figured out in a larger area unit than the cell, and the UE must transition to the RRC CONNECTED state in order to receive a normal mobile communication service such as voice or data. Each TA is identified through a tracking area identity (TAI). The terminal may configure a TAI through a tracking area code (TAC), which is information broadcasted in a cell.

When the user first turns on the power of the terminal, the terminal first searches for an appropriate cell, establishes an RRC connection in the cell, and registers terminal information in the core network. After this, the terminal stays in the RRC_IDLE state. The UE staying in the RRC_IDLE state (re)selects a cell as needed and examines system information or paging information. This is referred to as camp on the cell. There are several cases in which the terminal remaining in the RRC_IDLE state needs to establish an RRC connection, the several cases are, for example, case of requiring data transmission due to reason such as user's call attempt or case of transmitting response message for paging signal received from E-UTRAN.

The NAS (Non-Access Stratum) layer performs functions such as session management and mobility management.

The NAS layer shown in FIG. 7 will be described in detail below.

The NAS layer is divided into a NAS entity for Mobility Management (MM) and a NAS entity for Session Management (SM).
1) ANAS entity for MM provides the following general functions.
   As a NAS procedure related to AMF, it includes the following.
   - Registration management and access management procedures. AMF supports the following functions.
   - Secure NAS signal connection between UE and AMF (integrity protection, encryption)
2) The NAS entity for SM performs session management between the UE and the SMF.

SM signaling messages are processed, i.e. generated and processed, in the NAS-SM layer of the UE and SMF. The content of the SM signaling message is not interpreted by AMF.
- In case of SM signaling transmission,
- The NAS entity for MM generates a NAS-MM message that derives how and where to deliver SM signaling messages through a security header indicating NAS transmission of SM signaling and additional information about the receiving NAS-MM.
- Upon receipt of SM signaling, the NAS entity for SM performs an integrity check of the NAS-MM message and interprets the additional information to derive a method and place to derive the SM signaling message.

Meanwhile, in FIG. 7, the RRC layer, the RLC layer, the MAC layer, and the PHY layer located under the NAS layer are collectively referred to as an access stratum (AS).

### <Problems to be solved in the disclosure of the present specification>

Improvement to network slices are being discussed in Rel-17. One of the discussions for improvement is "Support of 5GC assisted cell selection to access network slice". In particular, when a UE receiving S-NSSAI #1 service through a specific frequency band wants to receive S-NSSAI #2 service through a different frequency band, how to deal with the PDU session being used in the existing S-NSSAI #1 may be discussed.

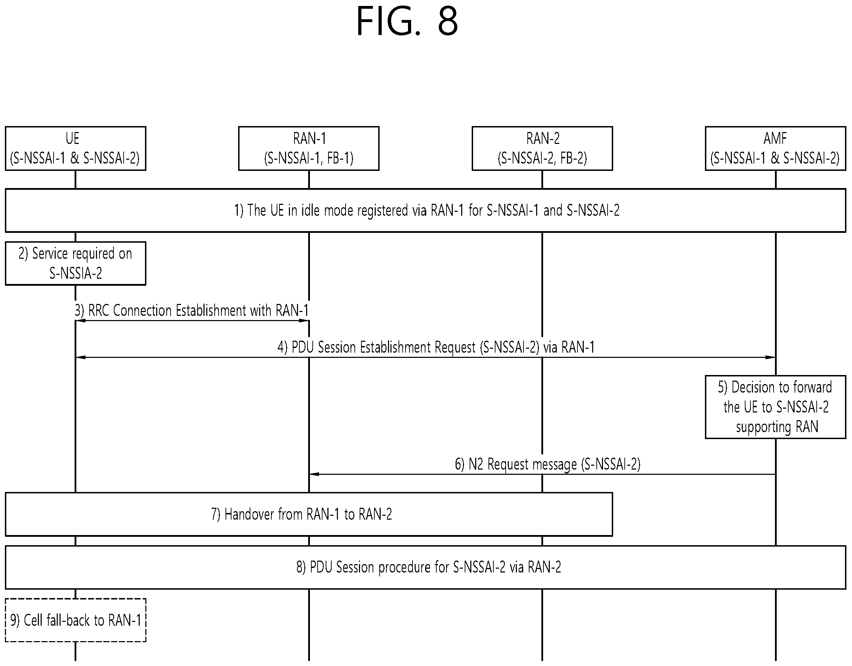

**FIG. 8** **shows an example of a solution for solving support of 5GC assisted cell selection to access network slice.**

It describes how 5GS steers UEs to a 5G-AN that can support the network slices that the UE can use.

The UE is allocated Allowed NSSAI which can contain S-NSSAIs supported in different frequency bands, however all S-NSSAIs are supported in all Tracking Areas or the Registration Area.
1. The UE is in idle mode and may be registered with RAN-1 for S-NSSAI-1 , which operates only in frequency band 1 (FB-1) and S-NSSAI-2, which operates only in frequency band 2 (FB-1).
2. An application in the UE needs to establish service on S-NSSAI-2 in FB-2.
3. The UE may establish RRC connection with RAN-1.
4. The UE may trigger PDU Session Establishment Request on S-NSSAI-2 via RAN-1.
5. AMF is aware that RAN-1, via which the UE is connected, does not support S-NSSAI-2 and the AMF is aware that S-NSSAI-2 is supported by another RAN Node.
6. AMF may request RAN-1 to steer the UE to a RAN Node supporting S-NSSAI-2.
7. RAN-1 may trigger inter-frequency cell change to RAN-2 which supports S-NSSAI-2 and is in UE's location.
   Note: It is for RAN Working Groups to define the inter-frequency cell change in connected mode e.g. Handover, Cell Change Order, RRC release with re-direction or RRC Connection reconfiguration.
8. AMF may continue with the PDU Session establishment procedure on S-NSSAI-2 via RAN-2.
9. After PDU session on S-NSSAI-2 is released, the UE may fall back (e.g. re-selects back) to a cell in FB-1. This step is optional.

The impact on services, entities and interfaces is as follows.

The UE may cell fall back to a cell on the initial frequency band (optional). AMF may decide and request for handover to a cell from another frequency band.

When falling back to the connected cell (RAN-1) in step 9 above, unnecessary signaling occurs because a PDU session established and used in RAN-1 must be newly created. Therefore, a solution for this is required for efficient communication.

### <disclosure of the present specification>

Disclosures described later in this specification may be implemented in one or more combinations (e.g., a combination including at least one of the contents described below). Each of the drawings represents an embodiment of each disclosure, but the embodiments of the drawings may be implemented in combination with each other.

Description of the method proposed in the disclosure of this specification may be composed of a combination of one or more operations/configurations/steps described below. The following methods described below may be performed or used in combination or complementary.

The present specification may provide a method for efficiently deactivating a PDU session being serviced through an existing frequency band when the frequency band used by the UE needs to be changed as the network slice used by the UE is changed.

Among service operations between core network functions (NFs), new service operations may be defined and used. In addition, some of the N2 messages between AMF and NG-RAN described below may be defined and used as new N2 messages. In addition, some of the RRC messages between the NG-RAN and the UE described below may be defined and used as new RRC messages.

Network slice and S-NSSAI may be used interchangeably.

Certain steps described in the specification may be performed concurrently/parallel to each other, or may be performed in an inverted order.

The following drawings are made to explain a specific example of the present specification. Since the names of specific devices or names of specific signals/messages/fields described in the drawings are provided as examples, the technical features of the present specification are not limited to the specific names used in the drawings below.

### 1. First disclosure

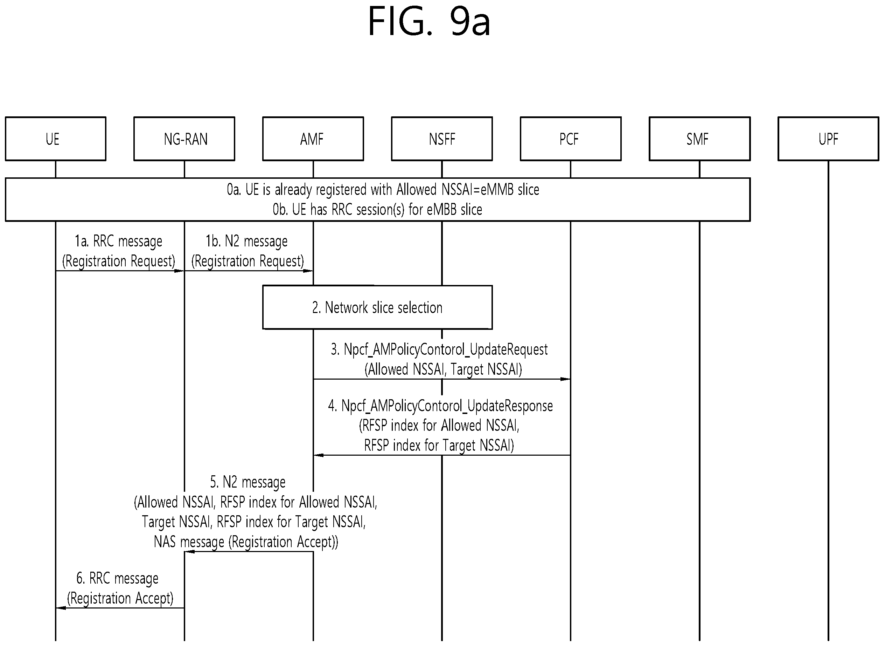

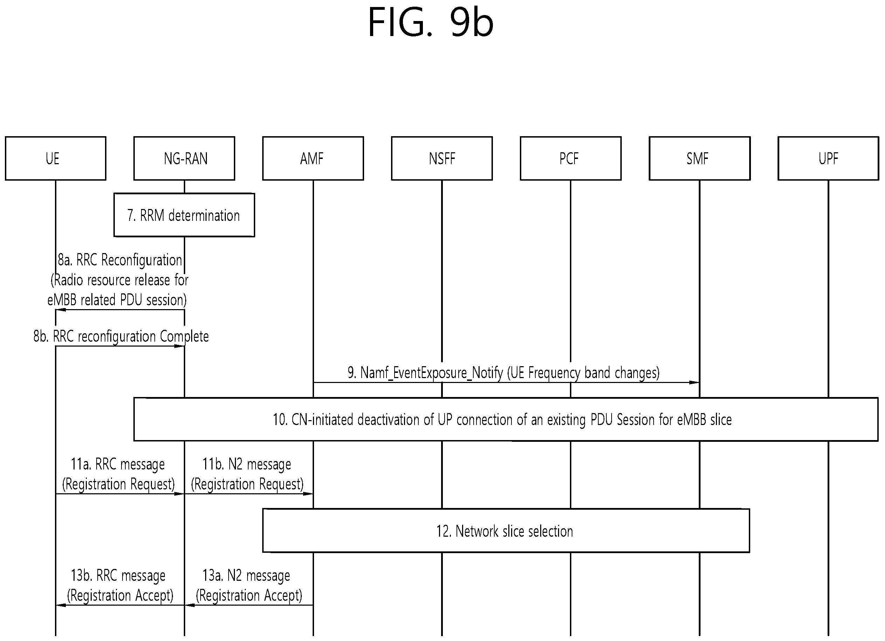

**FIGS. 9a** **and** **9b** **show the first disclosure of the present specification.**

FIGS. 9a and 9b show a method of requesting deactivation of a PDU session being serviced through an existing frequency band to the SMF when the frequency band of the terminal is changed using RRC reconfiguration.

FIG. 9a shows steps 0-6, and FIG. 9b shows subsequent steps. Steps 0-6 to be described in FIG. 9a are common in the second and fourth disclosures.

Basically, in the present specification, it is assumed that information on frequency bands usable by each network slice is not configured in the terminal. Also, it is assumed that the eMBB S-NSSAI is the default subscribed S-NSSAI.
0. It is assumed that the terminal has already been registered in the network and has received allowed NSSAI = eMBB S-NSSAI from AMF. In addition, it may be assumed that one or more PDU sessions for the eMBB slice are established.
1. The terminal may transmit a Registration Request message including Requested NSSAI (= vertical S-NSSAI) to the network through RRC and N2 messages in order to receive a service using a vertical network slice. The registration request message may include both the previously used eMBB S-NSSAI and vertical S-NSSAI in the Requested NSSAI. At this time, the terminal may include information such as GUAMI received from the AMF in the previous registration procedure in the registration request message and transmit it.
2. AMF may proceed, with NSSF, network slice selection procedures based on the Requested NSSAI transmitted by the UE. Since vertical S-NSSAI is not possible in the TA where the UE is located, eMBB S-NSSAI, which is the default subscribed S-NSSAI, may be determined as allowed NSSAI, and rejected NSSAI may be determined as vertical S-NSSAI.
3. Among the Requested NSSAIs, since there is an S-NSSAI (i.e., Vertical S-NSSAI) that is not currently permitted by the TA, the AMF may request an updated AM policy to the PCF. At this time, Allowed NSSAI and Target NSSAI may be included together and delivered to the PCF. Here, Target NSSAI may be set to S-NSSAI (i.e., Vertical S-NSSAI) that is not allowed in the current TA among the Requested NSSAI.
   Note: A priority value for each slice may be configured in a specific NF (e.g., AMF, NSSF, etc.) within 5GC. Priority information on these slices is stored as subscriber information in the UDM, so NFs such as AMF may know the priority between slices based on this. That is, the network may determine which slice should be serviced with a higher priority using the priority value.
   Among the Requested NSSAIs sent by the UE, there may be several S-NSSAIs that cannot be serviced at the same time because the frequency band used by individual network slices is not allowed in the current TA. At this time, if the frequency bands used by each S-NSSAI are all different, the AMF may cause the terminal to redirect to a frequency band that can service the network slice having the highest priority information.
4. PCF may determine RFSP values for Allowed NSSAI and Target NSSAI, respectively, and deliver them to AMF.
5. AMF may deliver an N2 message (e.g., Initial Context Setup Request or DL NAS Transport) including Allowed NSSAI and RFSP for it, Target NSSAI and RFSP value for it to NG-RAN. In addition, in order to deliver the Registration Accept message including Allowed NSSAI (= eMBB S-NSSAI, Rejected NSSAI = vertical S-NSSAI) to the terminal, it may be included in the N2 message in the form of a NAS message and delivered.
   Note: For the vertical S-NSSAI included in the Rejected NSSAI, the registration accept message may include a cause indicating that service cannot be provided because the frequency band used by the corresponding network slice is not permitted in the current TA. Through the cause, the terminal may know that the terminal needs to move to another frequency band in order to receive service through vertical S-NSSAI.
   Note: As soon as the eMBB service is ended, in order to control the redirection of the terminal so that the vertical service can be provided immediately, the AMF may give an indication to the NG-RAN to prohibit state transition of the UE to the RRC-INACTIVE state. Or, if the AMF has already downed RRC Inactive Assistance Information to the NG-RAN, it may send a message or an indication to erase the corresponding RRC Inactive Assistance Information. Alternatively, instead of an indication prohibiting state transition of the UE to the RRC-INACTIVE state, the AMF may made the NG-RAN to continuously report the RRC state to the AMF.
6. NG-RAN may deliver the Registration Accept message received in step 5 to the UE through an RRC message.
7. The NG-RAN may decide to redirect the UE to a frequency band used by the corresponding network slice so that the UE can receive service through the network slice included in the target NSSAI. This means redirection from the frequency band used by eMBB S-NSSAI to the frequency band used by vertical S-NSSAI.
8. NG-RAN may transmit an RRC Reconfiguration message including information necessary for redirection to the frequency band used by Vertical S-NSSAI to the UE. At this time, all radio resources allocated for the PDU session for the eMBB slice may be released.
After the configuration for redirection is completed, the UE may respond to the NG-RAN with an RRC Reconfiguration Complete message.
9. AMF may inform SMF that the terminal will change the frequency band to use vertical S-NSSAI using Namf_EventExposure_Notify or other messages.
   Note: If AMF determines that the priority of the vertical slice is higher than that of the eMBB slice (that is, if the service provided through the vertical slice is more important), even if DL data arrives after the deactivation process for the PDU session for eMBB slice is completed, AMF may additionally transmit, to the SMF, an indication not to inform it to the AMF.
10. Based on the notification received from the AMF in step 9, the SMF may perform a deactivation procedure for the PDU session for the eMBB slice. At this time, since the NG-RAN has already informed the terminal to release all radio resources allocated for the PDU session for the eMBB slice in step 8, when performing the CN-initiated deactivation process, additional Signaling (e.g. RRC connection reconfiguration) with the terminal may be omitted. Alternatively, the SMF may transmit signaling for PDU session deactivation only through UPF without signaling to the NG-RAN, assuming that deactivation has already been performed in the NG-RAN.
11. The UE may access the NG-RAN through a new frequency band based on the redirection information received in step 8. To this end, when performing redirection in the NG-RAN, an indication indicating that the UE perform redirection to service a network slice requested by the UE but unavailable in the current frequency band. may be included in step 8.Based on this indication, the UE may know that the requested NSSAI should be transmitted again after redirection. For example, at this time, the terminal may send a Registration Request message including Requested NSSAI (= vertical S-NSSAI) to the network again through RRC and N2 messages in order to receive a service using vertical slice. At this time, based on the cause of the reject NSSAI previously received in step 6, the terminal may include only vertical slices in the Requested NSSAI. Alternatively, Requested NSSAI may be transmitted including both eMBB and vertical slice according to conventional operation.
12. AMF may proceed with the network slice selection procedure with NSSF based on the Requested NSSAI sent by the terminal. Because the UE accessed through a frequency band that can use vertical S-NSSAI with a higher priority (i.e., because vertical S-NSSAI is available in the current TA), vertical S-NSSAI is determined as allowed NSSAI, and the remaining registration procedures may proceed.
13. AMF may deliver an N2 message (e.g., Initial Context Setup Request or DL NAS Transport) including Allowed NSSAI and corresponding RFSP to NG-RAN (step 13a). In addition, in order to deliver the Registration Accept message including Allowed NSSAI (= vertical S-NSSAI) to the terminal, it can be included in the N2 message in the form of a NAS message and delivered.

The NG-RAN may deliver the Registration Accept message received in step 13a to the UE through the RRC message. After that, the UE may create a PDU session for vertical S-NSSAI and receive service.

Note: In order to control the redirection of the terminal so that the eMBB service can be provided immediately as soon as the vertical service ends, the AMF may send an indication to NG-RAN to prohibit state transition of the UE to the RRC-INACTIVE state. Or, if the AMF has already given down RRC Inactive Assistance Information to the NG-RAN, the AMF may send a message or indication to erase the corresponding RRC Inactive Assistance Information. Alternatively, instead of an indication prohibiting state transition of the UE to the RRC-INACTIVE state, the AMF may make the NG-RAN to continuously report the RRC state to the AMF.

### 2. Second disclosure

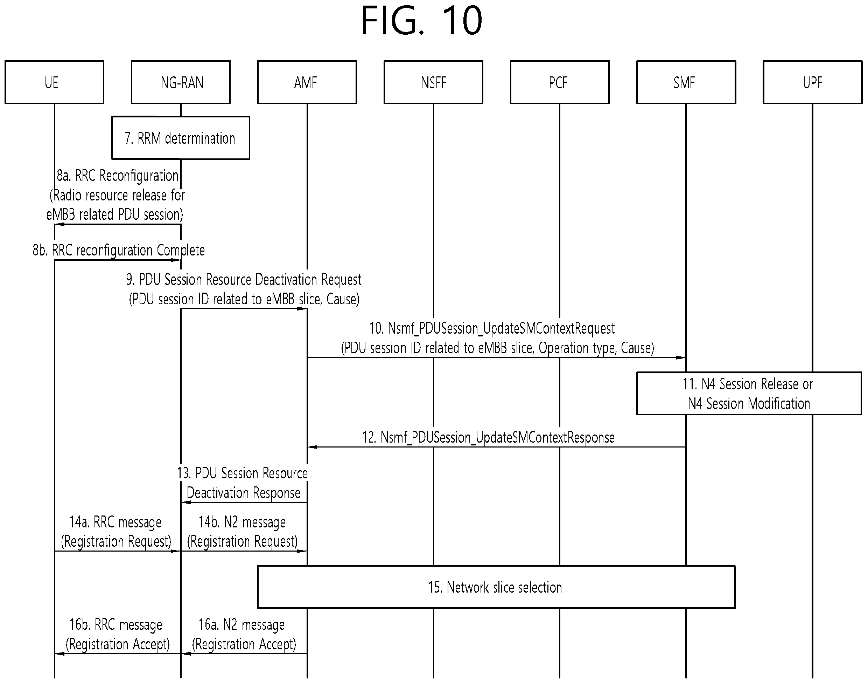

**FIG. 10** **shows the second disclosure of this specification.**

FIG. 10 provides a method for requesting deactivation of a PDU session being serviced through an existing frequency band to the SMF when the NG-RAN changes the frequency band of the UE using RRC reconfiguration.

Basically, in the present specification, it is assumed that information on frequency bands available for each network slice is not configured in the terminal. Also, it is assumed that the eMBB S-NSSAI is the default subscribed S-NSSAI.

Steps 0 and 1 to 6 performed prior to step 7, which will be described later, are replaced with the contents of FIG. 9a.

7. The NG-RAN may decide the UE to redirect to a frequency band used by the corresponding network slice so that the UE can receive service through the network slice included in the target NSSAI. This means redirection from the frequency band used by eMBB S-NSSAI to the frequency band used by vertical S-NSSAI.

Note: In this process, by requesting measurement result report to the UE, the NG-RAN may refer the measurement result report when the NG-RAN determines whether the UE needs to handover and determines target cell for handover

8. NG-RAN may transmit an RRC Reconfiguration message to the UE. The RRC Reconfiguration message may include information necessary for redirection to a frequency band used by Vertical S-NSSAI. At this time, the terminal may release all radio resources allocated for the PDU session for the eMBB slice.

After the configuration for redirection is completed, the UE may respond to the NG-RAN with an RRC Reconfiguration Complete message.

9. The NG-RAN may request deactivation of a specific PDU session to the AMF using a PDU session resource deactivation request (PDU session Resource Deactivation Request) or another message. The corresponding message may include both a list of PDU session IDs to be deactivated (e.g., PDU session IDs for eMBB slices) and a reason for deactivation (i.e., cause value = UE frequency band change). Alternatively, the NG-RAN may request deactivation by sending a message to each SMF managing the PDU sessions to be deactivated.

10. The AMF may request deactivation of a specific PDU session to the SMF using Nsmf_PDUSession_UpdateSMContext Request or another message. The corresponding message may include information received from the NG-RAN in step 9.

Note: If AMF determines that the priority of the vertical slice is higher than that of the eMBB slice (that is, if the service provided through the vertical slice is more important), even if DL data arrives after the deactivation process for the PDU session for eMBB slice is completed, AMF may additionally transmit, to the SMF, an indication not to inform it to the AMF.

11. The SMF requests the UPF to delete the AN Tunnel Info for N3 tunnel information for the PDU session for the eMBB slice received in step 10 using the N4 Session Release or N4 Session Modification procedure. Then, additional data transmission to the NG-RAN may be prevented.

12. The SMF may utilize Nsmf_PDUSession_UpdateSMContext Response or other messages to inform that the PDU session deactivation requested by the AMF has been successfully processed.

13. AMF may utilize the PDU Session Resource Deactivation Response or other messages to inform that the PDU session deactivation requested by the NG-RAN has been successfully processed.

14. The UE may access the NG-RAN through a new frequency band based on the redirection information received in step 8. At this time, the terminal may send a Registration Request message including Requested NSSAI (= vertical S-NSSAI) to the network again through RRC and N2 messages in order to receive service using vertical slice.

15. AMF may proceed with the network slice selection procedure with NSSF based on the Requested NSSAI sent by the terminal. Since the terminal accessed through a frequency band that can use vertical S-NSSAI (i.e., because vertical S-NSSAI is available in the current TA), vertical S-NSSAI is determined as allowed NSSAI, and the remaining Registration may proceed.

16. AMF may deliver an N2 message (e.g., Initial Context Setup Request or DL NAS Transport) including Allowed NSSAI and corresponding RFSP to NG-RAN (step 16a). In addition, the AMF may include a Registration Accept message including Allowed NSSAI (= vertical S-NSSAI) in the N2 message in the form of a NAS message to deliver to the NG-RAN (step 16a).

The NG-RAN may deliver the Registration Accept message received in step 16a to the UE through the RRC message (step 16b). After that, the UE may establish a PDU session for vertical S-NSSAI and receive service.

Note: AMF may give NG-RAN an indication to prohibit state transition of the UE to RRC-INACTIVE state in order to control redirection of the terminal so that eMBB service can be provided immediately as soon as the vertical service ends. Alternatively, instead of the indication to prohibit state transition of the UE to RRC-INACTIVE state, the NG-RAN may be made to continuously report the RRC state to the AMF.

### 3. Third Disclosure

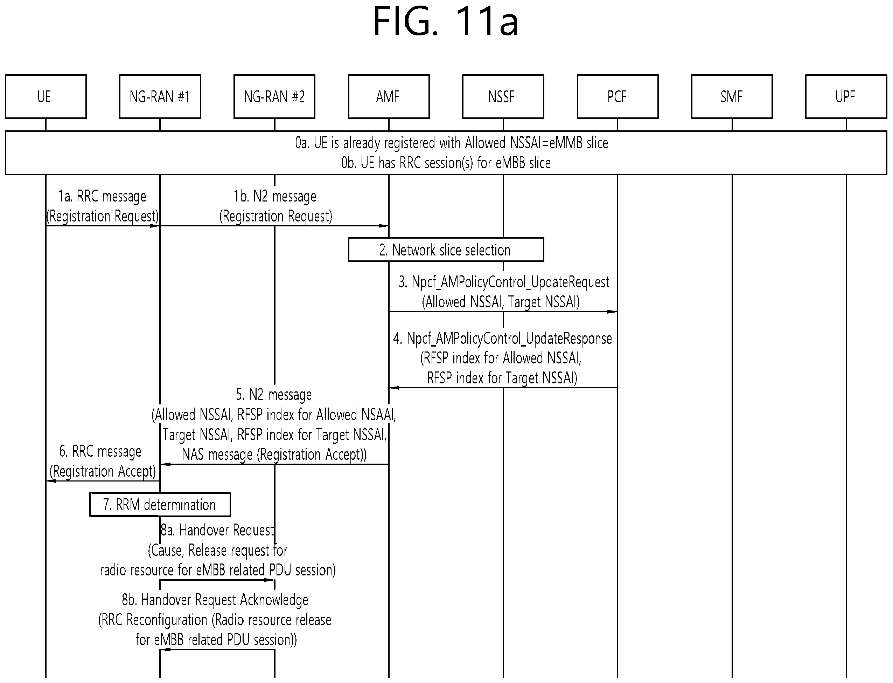

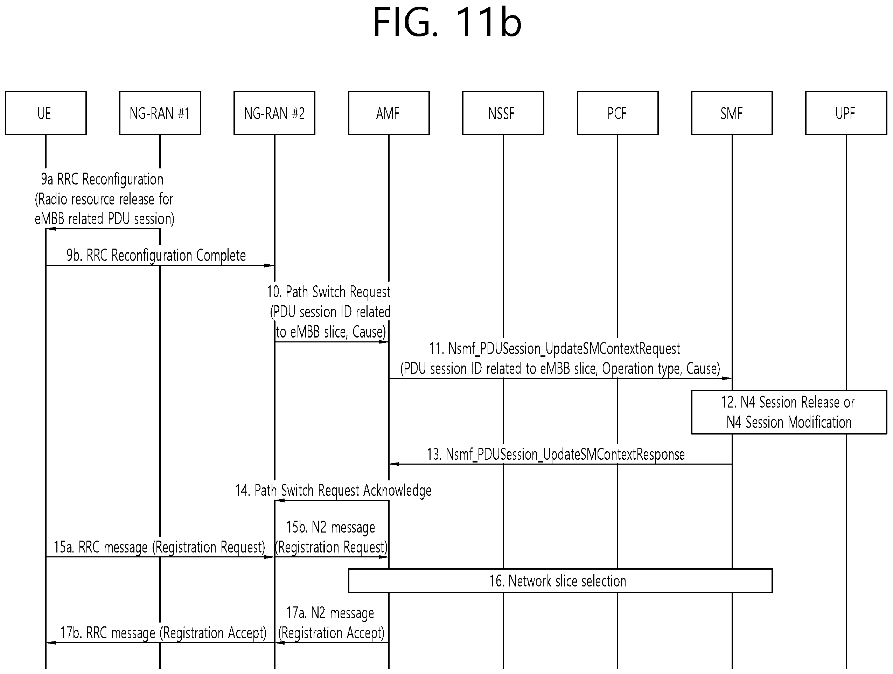

**FIGS. 11a** **and** **11b** **show the third disclosure of this specification.**

FIGS. 11a and 11b show a method by an NG-RAN for requesting, to an SMF, deactivation of a PDU session being serviced through an existing frequency band when changing a frequency band of a UE using Xn or NG-based handover.

Basically, in the present specification, it is assumed that information on frequency bands available for each network slice is not configured in the terminal. Also, it is assumed that the eMBB S-NSSAI is the default subscribed S-NSSAI.
0. It is assumed that the terminal has already been registered in the network and has received allowed NSSAI = eMBB S-NSSAI from AMF. In addition, it is a state in which one or more PDU sessions for the eMBB slice are established.
1. The terminal may transmit a Registration Request message including Requested NSSAI (= vertical S-NSSAI) to the network through RRC and N2 messages in order to receive a service using a vertical network slice. The registration request message may include both the previously used eMBB S-NSSAI and vertical S-NSSAI in the Requested NSSAI. At this time, the terminal may include information such as GUAMI received from the AMF in the previous registration procedure in the registration request message and transmit it.
2. AMF may proceed, with NSSF, network slice selection procedures based on the Requested NSSAI transmitted by the UE. Since vertical S-NSSAI is not possible in the TA where the UE is located, eMBB S-NSSAI, which is the default subscribed S-NSSAI, may be determined as allowed NSSAI, and rejected NSSAI may be determined as vertical S-NSSAI.
3. Among the Requested NSSAIs, since there is an S-NSSAI (i.e., Vertical S-NSSAI) that is not currently permitted by the TA, the AMF may request an updated AM policy to the PCF. At this time, Allowed NSSAI and Target NSSAI may be included together and delivered to the PCF. Here, Target NSSAI may be set to S-NSSAI (i.e., Vertical S-NSSAI) that is not allowed in the current TA among the Requested NSSAI.
   Note: A priority value for each slice may be configured in a specific NF (e.g., AMF, NSSF, etc.) within 5GC. Priority information on these slices is stored as subscriber information in the UDM, so NFs such as AMF may know the priority between slices based on this. That is, the network may determine which slice should be serviced with a higher priority using the priority value.
   Among the Requested NSSAIs sent by the UE, there may be several S-NSSAIs that cannot be serviced at the same time because the frequency band used by individual network slices is not allowed in the current TA. At this time, if the frequency bands used by each S-NSSAI are all different, the AMF may cause the terminal to redirect to a frequency band that can service the network slice having the highest priority information.
4. PCF may determine RFSP values for Allowed NSSAI and Target NSSAI, respectively, and deliver them to AMF.
5. AMF may deliver an N2 message (e.g., Initial Context Setup Request or DL NAS Transport) including Allowed NSSAI and RFSP for it, Target NSSAI and RFSP value for it to NG-RAN #1. In addition, in order to deliver the Registration Accept message including Allowed NSSAI (= eMBB S-NSSAI, Rejected NSSAI = vertical S-NSSAI) to the terminal, it may be included in the N2 message in the form of a NAS message and delivered.
   Note: For the vertical S-NSSAI included in the Rejected NSSAI, the registration accept message may include a cause indicating that service cannot be provided because the frequency band used by the corresponding network slice is not permitted in the current TA. Through the cause, the terminal may know that the terminal needs to move to another frequency band in order to receive service through vertical S-NSSAI.
   Note: As soon as the eMBB service is ended, in order to control the redirection of the terminal so that the vertical service can be provided immediately, the AMF may give an indication to the NG-RAN #1 to prohibit state transition of the UE to the RRC-INACTIVE state. Or, if the AMF has already downed RRC Inactive Assistance Information to the NG-RAN #1, it may send a message or an indication to erase the corresponding RRC Inactive Assistance Information. Alternatively, instead of an indication prohibiting state transition of the UE to the RRC-INACTIVE state, the AMF may made the NG-RAN #1 to continuously report the RRC state to the AMF.
6. NG-RAN #1 may deliver the Registration Accept message received in step 5 to the UE through an RRC message.
7. The NG-RAN #1 may decide to redirect the UE to a frequency band used by the corresponding network slice so that the UE can receive service through the network slice included in the target NSSAI. This means redirection from the frequency band used by eMBB S-NSSAI to the frequency band used by vertical S-NSSAI.
   In this process, by requesting measurement result report to the UE, the NG-RAN may refer the measurement result report when the NG-RAN determines whether the UE needs to handover and determines target cell for handover
8. If the cell to be redirected belongs to NG-RAN #2 (for example, due to differences in radio quality experienced by the UE for each cell), NG-RAN #1 may initiate a handover procedure by transmitting handover request to NG-RAN #2 (step 8a). At this time, NG-RAN #1 may notify NG-RAN #2 that it needs to release radio resources allocated for the PDU session for the eMBB slice. At this time, the reason may be transmitted together through cause or indication. Alternatively, NG-RAN #1 may inform NG-RAN #2 of an cause or indication that the UE wants to use the target NSSAI instead of the "Release request for radio resource for eMBB related PDU session" indication.
   Referring to the cause and additional indication sent by NG-RAN #1, NG-RAN #2 may accept handover for the UE even if there is no PDU session capable of providing service to the UE. NG-RAN #2 may inform NG-RAN #1 that it has recognized the handover request (step 8b). In addition, NG-RAN #2 may add content to release a radio resource allocated for a PDU session for an eMBB slice in an RRC message to be delivered to the terminal through NG-RAN #1.
   Note: It is applicable even when the frequency band and network slice supported by each RAN node are set differently.
   Note: If NG-based handover is executed instead of Xn-based handover, NG-RAN #1 may include cause and "Release request for radio resource for eMBB related PDU session" indication in source to target transparent container in NGAP Handover Required message, and deliver to NG-RAN #2. In the corresponding container, cause or indication that the terminal wants to use the target NSSAI may be added.
9. NG-RAN #1 receiving the RRC Reconfiguration message generated by NG-RAN #2 may deliver it to the UE. The RRC Reconfiguration message may include information necessary for redirection to a frequency band used by Vertical S-NSSAI. At this time, the UE may release all radio resources allocated for the PDU session for the eMBB slice.
   After the configuration for redirection is completed, the UE may respond to NG-RAN #2 with an RRC Reconfiguration Complete message.
10. In the case of Xn-based handover, after the UE successfully attaches to NG-RAN #2, NG-RAN #2 may transmit a Path Switch Request to AMF. At this time, NG-RAN #2 may request deactivation of a specific PDU session to AMF. The Path Switch Request may include both the list of PDU session IDs to be deactivated (for example, PDU session IDs for eMBB slices in this case) and the reason for deactivation (i.e., cause value = UE frequency band changes).
   At this time, the Path Switch Request may not include information on PDU session that can be serviced in NG-RAN #2. In this case, in order to prevent AMF from treating this as an error, NG-RAN #2 may add a specific indication to the Path Switch Request.
   Note: In the case of NG-based handover, NG-RAN #2 may transmit Handover Request Acknowledge to AMF during handover preparation. At this time, NG-RAN #2 may request deactivation of a specific PDU session to AMF. The request may include both the list of PDU session IDs to be deactivated (for example, PDU session IDs for eMBB slices in this case) and the reason for deactivation (i.e., cause value = UE frequency band changes).
   Also at this time, Handover Request Acknowledge may be transmitted without PDU session information that can be serviced in NG-RAN #2. In this case, NG-RAN #2 may add a specific indication to Handover Request Acknowledge so that AMF does not treat this as an error.
   Note: In the case of Xn-based handover in step 10, the Path Switch Request message may not include deactivation information for the PDU session for eMBB. Alternatively, in the case of NG-based handover, the Handover Request Acknowledge message may not include deactivation information on the PDU session for eMBB. In this case, apart from the Path Switch Request or Handover Request Acknowledge message sent by NG-RAN #2, NG-RAN #1 may request deactivation of a specific PDU session to the AMF using a PDU Session Resource Deactivation Request or other message. In this case, the deactivation request may include a list of PDU session IDs to be deactivated (for example, PDU session IDs for eMBB slices in this case) and a reason for deactivation (ie, cause value = UE frequency band changes). Alternatively, NG-RAN #1 may request deactivation by sending a message to each SMF managing PDU sessions to be deactivated.
11. AMF may request deactivation of a specific PDU session to SMF using Nsmf_PDUSession_UpdateSMContext Request or other message. The deactivation request may include information received from NG-RAN in step 10.
   Note: If AMF determines that the priority of the vertical slice is higher than that of the eMBB slice (that is, if the service provided through the vertical slice is more important), even if DL data arrives after the deactivation process for the PDU session for eMBB slice is completed, AMF may additionally transmit, to the SMF, an indication not to inform it to the AMF.
12. The SMF requests the UPF to delete the AN Tunnel Info for N3 tunnel information for the PDU session for the eMBB slice received in step 10 using the N4 Session Release or N4 Session Modification procedure. Then, additional data transmission to the NG-RAN may be prevented.
13. The SMF may utilize Nsmf_PDUSession_UpdateSMContext Response or other messages to inform that the PDU session deactivation requested by the AMF has been successfully processed.
14. The AMF may notify that the PDU session deactivation requested by the NG-RAN has been successfully processed, by utilizing a Path Switch Request Acknowledge or other message.
15. The UE may access NG-RAN #2 through the new frequency band based on the redirection information received in Step 9. At this time, the UE may send a Registration Request message including Requested NSSAI (= vertical S-NSSAI) to the network again through RRC and N2 messages in order to receive service using vertical slice.
16. AMF may proceed with the network slice selection procedure with NSSF based on the Requested NSSAI sent by the terminal. Since the terminal accessed through a frequency band that can use vertical S-NSSAI (i.e., because vertical S-NSSAI is available in the current TA), vertical S-NSSAI is determined as allowed NSSAI, and the remaining Registration may proceed.
17. AMF may deliver an N2 message (e.g., Initial Context Setup Request or DL NAS Transport) including Allowed NSSAI and corresponding RFSP to NG-RAN (step 17a). In addition, in order to deliver the Registration Accept message including Allowed NSSAI = vertical S-NSSAI to the terminal, it can be included in the N2 message in the form of a NAS message and delivered.
   The NG-RAN may deliver the Registration Accept message received in step 17a to the UE through the RRC message (step 17b). After that, the UE may receive the service by establishing a PDU session for vertical S-NSSAI.
   Note: AMF may give NG-RAN an indication to prohibit state transition of the UE to RRC-INACTIVE state in order to control redirection of the terminal so that eMBB service can be provided immediately as soon as the vertical service ends. Alternatively, instead of the indication to prohibit state transition of the UE to RRC-INACTIVE state, the NG-RAN may be made to continuously report the RRC state to the AMF.

### 4. Fourth disclosure

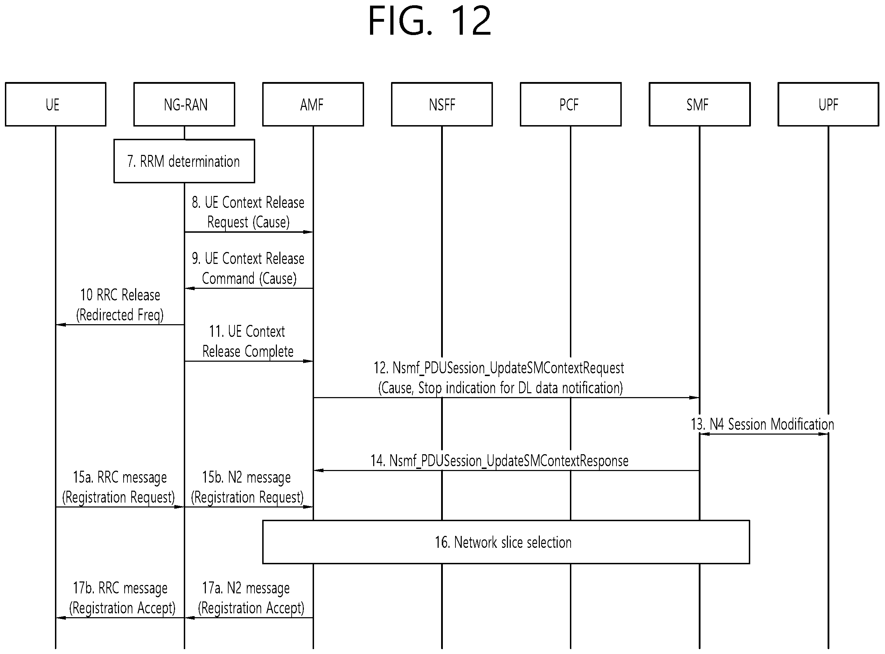

**FIG. 12** **shows the fourth disclosure of this specification.**

FIG. 12 shows a method that the AMF make the SMF not notify about DL data based on the priority between the network slice that the terminal is currently using and the network slice that the terminal is to receive when changing the frequency band of the terminal using RRC release

Basically, in the present specification, it is assumed that information on frequency bands available for each network slice is not configured in the terminal. Also, it is assumed that the eMBB S-NSSAI is the default subscribed S-NSSAI.

Steps 0 and 1 to 4 performed prior to step 5, which will be described later, are replaced with the contents of FIG. 9a.

5. AMF may deliver an N2 message (e.g., Initial Context Setup Request or DL NAS Transport) including Allowed NSSAI and RFSP for it, Target NSSAI and RFSP value for it to NG-RAN. In addition, in order to deliver the Registration Accept message including Allowed NSSAI (= eMBB S-NSSAI, Rejected NSSAI = vertical S-NSSAI) to the terminal, it may be included in the N2 message in the form of a NAS message and delivered.

Note: For the vertical S-NSSAI included in the Rejected NSSAI, the registration accept message may include a cause indicating that service cannot be provided because the frequency band used by the corresponding network slice is not permitted in the current TA. Through the cause, the terminal may know that the terminal needs to move to another frequency band in order to receive service through vertical S-NSSAI.

Note: As soon as the eMBB service is ended, in order to control the redirection of the terminal so that the vertical service can be provided immediately, the AMF may give an indication to the NG-RAN to prohibit state transition of the UE to the RRC-INACTIVE state. Alternatively, instead of an indication prohibiting state transition of the UE to the RRC-INACTIVE state, the AMF may made the NG-RAN to continuously report the RRC state to the AMF.

6. NG-RAN may deliver the Registration Accept message received in step 5 to the UE through an RRC message.

7. The NG-RAN may decide to redirect the UE to a frequency band used by the corresponding network slice so that the UE can receive service through the network slice included in the target NSSAI. This means redirection from the frequency band used by eMBB S-NSSAI to the frequency band used by vertical S-NSSAI.

8. NG-RAN may initiate the AN release procedure by delivering a UE Context Release Request message to AMF for redirection to the frequency band used by Vertical S-NSSAI. The message may include a cause value indicating that context release has started to change the frequency band of the UE. In addition, a list of PDU session IDs for eMBB in an active state may be included.

9. AMF may deliver the UE Context Release Command message including the cause value received in step 8 to NG-RAN.

10. NG-RAN may transmit an RRC Release message including information necessary for redirection to the frequency band used by Vertical S-NSSAI to the UE. Accordingly, the UE may release all radio resources allocated for the PDU session for the eMBB slice.

NOTE: Step 10 may be performed before Step 8.

11. NG-RAN may respond to AMF with a UE Context Release Complete message when release of radio resources is finished.

12. AMF may request deactivation of a specific PDU session to the SMF using Nsmf_PDUSession_UpdateSMContext Request or other messages. AMF may notify that the AN release procedure has started using the Nsmf_PDUSession_UpdateSMContext Request message. To this end, the message may include the cause value received in step 8. At this time, a list of active eMBB PDU session IDs received in step 8 may also be included in the message and transmitted.

If AMF determines that the priority of the vertical slice is higher than that of the eMBB slice (that is, if the service provided through the vertical slice is more important), even if DL data arrives after the deactivation process for the PDU session for eMBB slice is completed, AMF may additionally transmit, to the SMF, an indication not to inform it to the AMF.

13. The SMF may prevent additional data transmission to the NG-RAN by requesting the UPF to delete the AN Tunnel Info for N3 tunnel information for the PDU session for the eMBB slice received in step 12 using the N4 Session Modification procedure.

14. The SMF may utilize Nsmf_PDUSession_UpdateSMContext Response or other messages to inform that the PDU session deactivation requested by the NG-RAN has been successfully processed.

15. The UE may access the NG-RAN through a new frequency band based on the redirection information received in step 10. At this time, the UE may send a Registration Request message including Requested NSSAI (= vertical S-NSSAI) to the network again through RRC and N2 messages in order to receive service using vertical slice.

16. AMF may proceed with the network slice selection procedure with NSSF based on the Requested NSSAI sent by the terminal. Since the terminal accessed through a frequency band that can use vertical S-NSSAI (i.e., because vertical S-NSSAI is available in the current TA), vertical S-NSSAI is determined as allowed NSSAI, and the remaining Registration may proceed.

17. AMF may deliver an N2 message (e.g., Initial Context Setup Request or DL NAS Transport) including Allowed NSSAI and corresponding RFSP to NG-RAN (step 17a). In addition, in order to deliver the Registration Accept message including Allowed NSSAI = vertical S-NSSAI to the terminal, it can be included in the N2 message in the form of a NAS message and delivered.

The NG-RAN may deliver the Registration Accept message received in step 17a to the UE through the RRC message (step 17b). After that, the UE may receive the service by establishing a PDU session for vertical S-NSSAI.

Note: AMF may give NG-RAN an indication to prohibit state transition of the UE to RRC-INACTIVE state in order to control redirection of the terminal so that eMBB service can be provided immediately as soon as the vertical service ends. Alternatively, instead of the indication to prohibit state transition of the UE to RRC-INACTIVE state, the NG-RAN may be made to continuously report the RRC state to the AMF.

The terminal may be redirected from a vertical slice (which can be interpreted as a non-default network slice) to an eMBB slice (which can be interpreted as a default network slice). After the 1-4 disclosures are performed, the terminal may be redirected from the vertical slice to the eMBB slice.
(A) When service is finished on a vertical slice (which can be interpreted as a non-default slice), the UE may be redirected to an eMBB slice (which can be interpreted as a default slice).

As the NG-RAN detects inactivity of the UE and performs AN release or informs the AMF of the inactivity of the UE, the AMF may know that the UE has finished service in the vertical slice. Accordingly, the AMF may redirect the UE to the frequency band of the eMBB slice. The operation to make the UE redirect to the eMBB slice by the AMF may be performed by setting i) Allowed NSSAI to Vertical S-NSSAI and ii) Target NSSAI to eMBB S-NSSAI in step 3 of FIG. 9a. Thereafter, steps 4 and 5 of FIG. 9a are performed, and the NAS message may not be included in the N2 message in step 5.

Subsequently, as step 7 is performed, the NG-RAN may determine the UE to redirect to a frequency band where the eMBB slice is serviced. NG-RAN may create an RRC release and include cell reselection priority in the RRC release. The NG-RAN may transmit an RRC release message including cell reselection priorities to the UE. Alternatively, the NG-RAN may transmit RRC Reconfiguration to the UE to move the UE according to the RFSP for the target NSSAI. The NG-RAN may include an indication of redirection to service a network slice unavailable in the current frequency band in the RRC release or RRC Reconfiguration. Based on this indication, the terminal may include the requested NSSAI in the registration request after redirection and transmit the requested NSSAI through an RRC message to the NG-RAN. Then, the NG-RAN may transmit a registration request message including the requested NSSAI to the AMF.

Then, step 11a - step 13b may be performed. When the UE transmits the registration request to the NG-RAN in step 11a, the UE may include information to reactivate the user plane (UP) of the PDU session created in the eMBB slice in the registration request. As the information to reactivate, a List of PDU Session To Be Activated (e.g., an ID for a PDU session previously created for an eMBB slice, etc.) or a new parameter may be used. As a result, UP of the PDU session may be activated in a registration procedure. The UE may include the re-activation information in the registration request even though there is no pending uplink data for the PDU session created in the eMBB slice. When performing the registration procedure for the default network slice, when performing the registration procedure for the default network slice after receiving service from the non-default network slice, when performing the registration procedure to receive service from the default network slice, as described above, the UE may include the reactivation information in the registration request. In addition, the UE may include the reactivation information in the registration request as described above for a non-default network slice. That is, i) when performing the registration procedure for the non-default network slice, ii) when the registration procedure is performed for the non-default slice after service is received from the default network slice or iii) when registration procedure is performed to receive service from the non-default network slice, as described above, the UE may include the re-activation information in the registration request.

Inactivity of the UE by the NG-RAN may be detected as the NG-RAN drives the inactivity timer for the UE, or be detected as the NG-RAN receives an instruction from the SMF to deactivate the UP of the PDU session for the UE. The NG-RAN may include a special cause (unlike the conventional cause) value in the AN release operation or in the operation of informing the AMF of the inactivity of the UE.

(B) While receiving service in a vertical slice (which may be a non-default network slice), DL data may occur in a PDU session of an eMBB slice. If the AMF does not tell the SMF not to notify even if DL data arrives in the PDU session of the eMBB slice, the SMF makes a request to activate the PDU session to the AMF as before. Upon receiving the request, the AMF may move the terminal to the frequency band of the eMBB slice. The method described in (A) above may be used. Accordingly, AMF may perform operations from step 3 of FIG. 9a as described in (A) above. Subsequent operations follow those described in (A) above. AMF may move the terminal to the eMBB slice when DL data for this is generated. AMF may move the terminal to the eMBB slice only in the case of a voice call, since the DL data is for a specific service (e.g., voice call, etc.). That is, if the importance of the service associated with the corresponding PDU session is low, the AMF may not move the UE to the eMBB slice. Information on the specific service (e.g., importance of the corresponding service, etc.) may be stored in subscriber information. Alternatively, information on the specific service may be set in a specific NF (AMF, SMF, etc.). Information on the specific service may be provided by the UE.

In (A) and (B), if the AMF already stores the RFSP values of Allowed NSSAI and Target NSSAI, interaction with the PCF (steps 3 and 4 in FIG. 9a) may be omitted.

Through the present specification, by effectively deactivating a PDU session being serviced through an existing frequency band before the UE moves to another frequency band, the situation in which DL data is unnecessarily transmitted to the RAN can be avoided and PDU sessions can be quickly activated to provide service to the UE when the UE returns to the existing frequency.

In the above, RFSP is used to move the UE to a frequency band serviced by another network slice. However, it is possible to cause the NG-RAN to move the UE to another network slice through other information (e.g., Target NSSAI value, etc.).

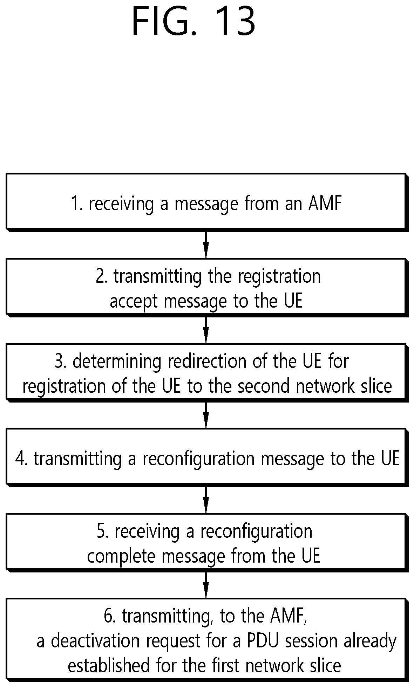

**FIG. 13** **shows a procedure of NG-RAN for the second disclosure of the present specification.**
1. The NG-RAN may receive a message from AMF.
   The message may include i) a registration accept message, ii) an allowed NSSAI (Network Slice Selection Assistance Information) including a first network slice already allowed for a UE (user equipment) and iii) a target NSSAI including a second network slice whose service is desired by the UE and which is not supported for the UE.
   The message may include RFSP (RAT/Frequency Selection Priority) information for the target NSSAI. The message may include rejection information for the second network slice, the rejection information may include a reason why the second network slice is not supported for the UE. The message may include an indication for prohibiting state transition to the RRC-INACTIVE state.
2. The NG-RAN may transmit the registration accept message to the UE.
3. The NG-RAN may determine redirection of the UE for registration of the UE to the second network slice.
4. The NG-RAN may transmit a reconfiguration message to the UE.
   The reconfiguration message may include information for the redirection.
5. The NG-RAN may receive a reconfiguration complete message from the UE.
6. The NG-RAN may transmit, to the AMF, a deactivation request for a PDU session already established for the first network slice.

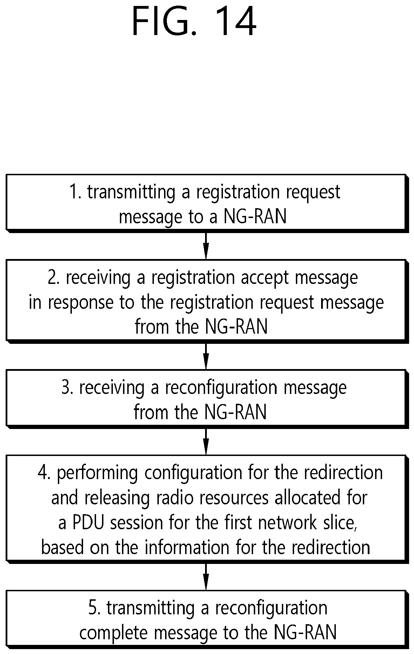

**FIG. 14** **shows a procedure of UE for the second disclosure of the present specification.**
1. The UE may transmit a registration request message to a NG-RAN (Next-Generation Radio Access Network).
   The registration request message may include a requested NSSAI (Network Slice Selection Assistance Information) including a second network slice whose service is desired by the UE, a first network slice is already permitted to the UE.
2. The UE may receive a registration accept message in response to the registration request message from the NG-RAN.
   The registration accept message may include an allowed NSSAI including the first network slice and a rejected NSSAI including the second network slice. The registration accept message may include RFSP (RAT/Frequency Selection Priority) information for the target NSSAI.
3. The UE may receive a reconfiguration message from the NG-RAN.
   The reconfiguration message may include information for a redirection of the UE.
4. The UE may perform configuration for the redirection based on the information for the redirection. The UE may release radio resources allocated for a PDU (Protocol Data Unit) session for the first network slice.
5. The UE may transmit a reconfiguration complete message to the NG-RAN.

Hereinafter, an apparatus for performing communication according to some embodiments of the present specification will be described.

For example, a terminal may include a processor, a transceiver, and a memory.

For example, a processor may be configured to be operably coupled with a memory and a processor.

The apparatus transmits a registration request message to a Next-Generation Radio Access Network (NG-RAN) through the transceiver.

The registration request message includes a requested NSSAI (Network Slice Selection Assistance Information) including a second network slice whose service is desired by the UE, a first network slice is already permitted to the UE;

The apparatus receives a registration accept message in response to the registration request message from the NG-RAN. The registration accept message includes an allowed NSSAI including the first network slice and a rejected NSSAI including the second network slice. The apparatus receives a reconfiguration message from the NG-RAN. The reconfiguration message includes information for a redirection of the UE;

The apparatus performs configuration for the redirection based on the information for the redirection; the apparatus releases radio resources allocated for a PDU (Protocol Data Unit) session for the first network slice; and the apparatus transmits a reconfiguration complete message to the NG-RAN.

Hereinafter, a processor for performing communication according to some embodiments of the present specification will be described.

The processor is configured to: transmitting a registration request message to a NG-RAN (Next-Generation Radio Access Network), wherein the registration request message includes a requested NSSAI (Network Slice Selection Assistance Information) including a second network slice whose service is desired by the UE, a first network slice is already permitted to the UE; receiving a registration accept message in response to the registration request message from the NG-RAN, wherein the registration accept message includes an allowed NSSAI including the first network slice and a rejected NSSAI including the second network slice; receiving a reconfiguration message from the NG-RAN, wherein the reconfiguration message includes information for a redirection of the UE; performing configuration for the redirection based on the information for the redirection; releasing radio resources allocated for a PDU (Protocol Data Unit) session for the first network slice; and transmitting a reconfiguration complete message to the NG-RAN.

Hereinafter, a non-volatile computer readable medium storing one or more instructions for performing communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting a registration request message to a NG-RAN (Next-Generation Radio Access Network), wherein the registration request message includes a requested NSSAI (Network Slice Selection Assistance Information) including a second network slice whose service is desired by the UE, a first network slice is already permitted to the UE; receiving a registration accept message in response to the registration request message from the NG-RAN, wherein the registration accept message includes an allowed NSSAI including the first network slice and a rejected NSSAI including the second network slice; receiving a reconfiguration message from the NG-RAN, wherein the reconfiguration message includes information for a redirection of the UE; performing configuration for the redirection based on the information for the redirection; releasing radio resources allocated for a PDU (Protocol Data Unit) session for the first network slice; and transmitting a reconfiguration complete message to the NG-RAN.

The present specification may have various effects.

For example, upon redirection of the terminal, deactivation for the previously established PDU session is performed, and when the terminal redirects again, the corresponding service can be quickly provided only by activation of the established PDU session.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a NG-RAN (Next-Generation Radio Access Network), comprising:
receiving a message from an AMF (Access and Mobility Management Function),
wherein the message includes i) a registration accept message, ii) an allowed NSSAI (Network Slice Selection Assistance Information) including a first network slice already allowed for a UE (user equipment) and iii) a target NSSAI including a second network slice whose service is desired by the UE and which is not supported for the UE;
transmitting the registration accept message to the UE;
determining redirection of the UE for registration of the UE to the second network slice;
transmitting a reconfiguration message to the UE;
wherein the reconfiguration message includes information for the redirection;
receiving a reconfiguration complete message from the UE; and
transmitting, to the AMF, a deactivation request for a PDU session already established for the first network slice.

2. The method of claim 1,
wherein the message includes RFSP (RAT/Frequency Selection Priority) information for the target NSSAI.

3. The method of claim 1,
wherein the message includes rejection information for the second network slice,
wherein the rejection information includes a reason why the second network slice is not supported for the UE.

4. The method of claim 1,
wherein the message includes an indication for prohibiting state transition to the RRC-INACTIVE state.

5. The method of claim 1,
wherein the message is a NAS (Non-Access-Stratum) message.

6. ANG-RAN (Next-Generation Radio Access Network) to perform communication, comprising:
a transceiver; and
a processor,
wherein the transceiver receives a message from an AMF (Access and Mobility Management Function),
wherein the message includes i) a registration accept message, ii) an allowed NSSAI (Network Slice Selection Assistance Information) including a first network slice already allowed for a UE (user equipment) and iii) a target NSSAI including a second network slice whose service is desired by the UE and which is not supported for the UE;
wherein the transceiver transmits the registration accept message to the UE;
wherein the processor determines redirection of the UE for registration of the UE to the second network slice;
wherein the transceiver transmits a reconfiguration message to the UE;
wherein the reconfiguration message includes information for the redirection;
wherein the transceiver receives a reconfiguration complete message from the UE; and
wherein the transceiver transmits, to the AMF, a deactivation request for a PDU session already established for the first network slice.

7. The NG-RAN of claim 6,
wherein the message includes RFSP (RAT/Frequency Selection Priority) information for the target NSSAI.

8. The NG-RAN of claim 6,
wherein the message includes rejection information for the second network slice,
wherein the rejection information includes a reason why the second network slice is not supported for the UE.

9. The NG-RAN of claim 6,
wherein the message includes an indication for prohibiting state transition to the RRC-INACTIVE state.

10. The NG-RAN of claim 6,
wherein the message is a NAS (Non-Access-Stratum) message.

11. A method for performing communication, performed by a UE (User Equipment), comprising:
transmitting a registration request message to a NG-RAN (Next-Generation Radio Access Network),
wherein the registration request message includes a requested NSSAI (Network Slice Selection Assistance Information) including a second network slice whose service is desired by the UE, a first network slice is already permitted to the UE;
receiving a registration accept message in response to the registration request message from the NG-RAN,
wherein the registration accept message includes an allowed NSSAI including the first network slice and a rejected NSSAI including the second network slice;
receiving a reconfiguration message from the NG-RAN,
wherein the reconfiguration message includes information for a redirection of the UE;
performing configuration for the redirection based on the information for the redirection;
releasing radio resources allocated for a PDU (Protocol Data Unit) session for the first network slice based on the information for the redirection; and
transmitting a reconfiguration complete message to the NG-RAN.

12. The method of claim 11,
wherein the registration accept message includes RFSP (RAT/Frequency Selection Priority) information for the target NSSAI.

13. A UE (User Equipment) to perform communication, comprising:
a transceiver; and
a processor,
wherein the transceiver transmits a registration request message to a NG-RAN (Next-Generation Radio Access Network),
wherein the registration request message includes a requested NSSAI (Network Slice Selection Assistance Information) including a second network slice whose service is desired by the UE, a first network slice is already permitted to the UE;
wherein the transceiver receives a registration accept message in response to the registration request message from the NG-RAN,
wherein the registration accept message includes an allowed NSSAI including the first network slice and a rejected NSSAI including the second network slice;
wherein the transceiver receives a reconfiguration message from the NG-RAN,
wherein the reconfiguration message includes information for a redirection of the UE;
wherein the processor performs configuration for the redirection based on the information for the redirection;
wherein the processor releases radio resources allocated for a PDU (Protocol Data Unit) session for the first network slice based on the information for the redirection; and
wherein the transceiver transmits a reconfiguration complete message to the NG-RAN.

14. The UE of claim 13,
wherein the registration accept message includes RFSP (RAT/Frequency Selection Priority) information for the target NSSAI.

15. An apparatus in mobile communication, the apparatus comprising:
at least one processor; and
at least one memory storing instructions and operably electrically connectable with the at least one processor;
operation performed, based on the instructions being executed by the at least one processor, comprising:
transmitting a registration request message to a NG-RAN (Next-Generation Radio Access Network),
wherein the registration request message includes a requested NSSAI (Network Slice Selection Assistance Information) including a second network slice whose service is desired by the UE, a first network slice is already permitted to the UE;
receiving a registration accept message in response to the registration request message from the NG-RAN,
wherein the registration accept message includes an allowed NSSAI including the first network slice and a rejected NSSAI including the second network slice;
receiving a reconfiguration message from the NG-RAN,
wherein the reconfiguration message includes information for a redirection of the UE;
performing configuration for the redirection based on the information for the redirection;
releasing radio resources allocated for a PDU (Protocol Data Unit) session for the first network slice based on the information for the redirection; and
transmitting a reconfiguration complete message to the NG-RAN.

16. A non-volatile computer-readable storage medium having recorded thereon instructions,
wherein the instructions, when executed by one or more processors, cause the one or more processors to:
transmitting a registration request message to a NG-RAN (Next-Generation Radio Access Network),
wherein the registration request message includes a requested NSSAI (Network Slice Selection Assistance Information) including a second network slice whose service is desired by the UE, a first network slice is already permitted to the UE;
receiving a registration accept message in response to the registration request message from the NG-RAN,
wherein the registration accept message includes an allowed NSSAI including the first network slice and a rejected NSSAI including the second network slice;
receiving a reconfiguration message from the NG-RAN,
wherein the reconfiguration message includes information for a redirection of the UE;
performing configuration for the redirection based on the information for the redirection;
releasing radio resources allocated for a PDU (Protocol Data Unit) session for the first network slice based on the information for the redirection; and
transmitting a reconfiguration complete message to the NG-RAN.
